# FASCICULE DE BREVET EUROPEEN

(11) **EP 1 493 542 B1**
(45) Date de publication et mention de la délivrance du brevet: **23.09.2009**
(21) Numéro de dépôt: 04362006.1
(22) Date de dépôt: 25.06.2004
(51) Int. Cl.: B27K 5/00, B27H 5/08, C12H 1/22

(54) **Procédé de traitement de fûts en bois et dispositif pour sa mise en oeuvre**
Verfahren zur Behandlung von Holzfässern und Vorrichtung dafür
Method for treating a wooden barrel and apparatus thereof

(30) Priorité: 27.06.2003 FR 0307784
(43) Date de publication de la demande: 05.01.2005
(73) Titulaire: Sarl Wilfa, 16100 Merpins (FR)
(72) Inventeur: Navarre, Didier, 16370 Saint Sulpice de Cognac (FR)
(74) Mandataire: Fantin, Laurent

(56) Documents cités:
- GB-A- 319 562
- US-A- 1 126 450
- US-A- 2 507 685
- US-A- 5 630 265
- US-A1- 2002 122 742

## Description

La présente invention se rapporte à un procédé de traitement ou de reconditionnement de fûts en bois ainsi qu'à un dispositif pour sa mise en oeuvre. Pour l'élevage du vin, on utilise généralement un fût en bois dans lequel le vin est conservé pendant une durée plus ou moins longue, variant généralement de 10 à 18 mois. L'élevage en fût de bois est notamment préconisé pour les vins de garde en raison des échanges tannique et aromatique entre le bois et le vin.

Le fût en bois peut prendre différentes appellations, barriques, tonneaux ou analogues, en fonction de ses formes, de ses dimensions et de la région.

Il comprend généralement un corps appelé coque constituée de douelles avec à chaque extrémité des fonds. Lors de sa fabrication, le fût est soumis à une étape appelée chauffe, lors de laquelle ledit fût dépourvu de fond est disposé au-dessus d'un feu pour le brûlage des douelles. La chauffe a pour objectif de moduler la nature aromatique et tannique du bois en jouant sur la durée et l'intensité de la chauffe. Cette chauffe affecte le bois sur une épaisseur plus ou moins importante, en fonction de la technique de chauffe utilisée.

Lors de l'élevage du vin, un dépôt apparaît au niveau de la surface intérieure du fût, réduisant les échanges entre le bois et le vin. Aussi, après avoir servi à élever deux vins, le fût de bois doit être changé ou reconditionné.

Une première solution pour reconditionner un fût consiste à nettoyer avec un liquide adapté la paroi intérieure afin de retirer le dépôt, notamment par réaction chimique, pour permettre de nouveau les échanges entre le bois et le vin. Cette solution n'est pas satisfaisante car même nettoyé, le bois de la paroi intérieure n'offre plus les mêmes échanges qu'un fût neuf.

Une autre solution consiste à gratter ou raboter sur une faible épaisseur la paroi intérieure du fût afin de retirer le dépôt. Dans ce cas, une partie de la chauffe, réalisée lors de la fabrication, est conservée.

Si on ne pratique pas une nouvelle chauffe, les échanges obtenus après reconditionnement sont bien moindres que ceux obtenus avec un fût neuf.

Si on pratique une nouvelle chauffe, le bois de la paroi intérieure qui a conservé une partie de la chauffe initiale est brûlé ce qui affecte les qualités organoleptiques du vin élevé.

Aussi, la présente invention vise à pallier les inconvénients de l'art antérieur en proposant un nouveau procédé de reconditionnement de fûts en bois utilisés pour l'élevage du vin, des spiritueux ou analogue, permettant d'obtenir des résultats supérieurs aux techniques existantes, s'approchant des résultats obtenus avec un fût neuf.

A cet effet, l'invention a pour objet un procédé pour le traitement d'un fût en bois, notamment utilisé pour élever un vin, un spiritueux ou analogue, ledit fût ayant subi une chauffe dite initiale caractérisé en ce qu'il comprend les étapes suivantes consistant à :
- retirer la chauffe initiale sur au moins une partie de la surface intérieure du fût, et
- réaliser une nouvelle chauffe, d'intensité et durée variable en fonction de la nature aromatique et tannique du bois souhaitée.

Cette solution permet, de manière simple et pour un coût de revient relativement faible, de reconditionner les fûts afin d'obtenir des caractéristiques s'approchant de celles d'un fût neuf.

D'autres caractéristiques et avantages ressortiront de la description qui va suivre de l'invention, description donnée à titre d'exemple uniquement, en regard des dessins annexés sur lesquels:
- la figure 1 est une vue en perspective d'un fût en bois,
- les figures 2A à 2C sont des vues latérales illustrant les étapes du procédé de l'invention,
- la figure 3 est une vue en élévation latérale du dispositif utilisé pour la mise en oeuvre du procédé de l'invention,
- la figure 4 est une vue de dessus illustrant l'outil du dispositif, et
- les figures 5A à 5C sont des vues latérales illustrant le fonctionnement du dispositif de l'invention.

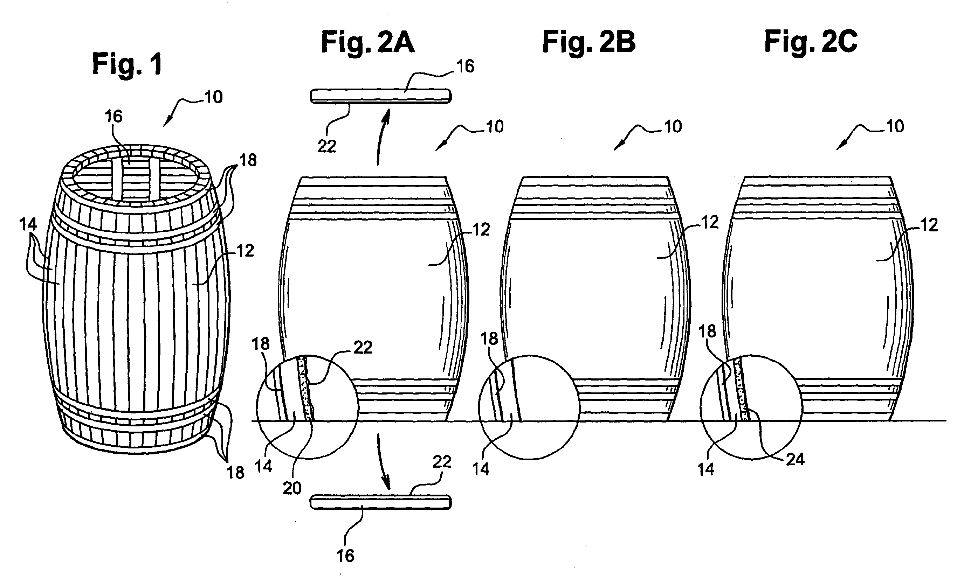

Sur la figure 1, on a représenté en 10 un fût en bois utilisé pour élever un vin. Par fût, on entend tout contenant en bois susceptible de prendre différentes appellations, fûts, barriques, tonneaux ou analogues, en fonction de ses formes, de ses dimensions et de la zone géographique.

Il comprend généralement un corps appelé coque 12 constituée de douelles 14 avec à chaque extrémité des fonds 16. Les douelles sont maintenues en position grâce à des cercles 18 de préférence métalliques. A chaque extrémité, le corps présente une gorge appelée jable apte à loger la périphérie des fonds, afin d'immobilier les fonds par resserrage de la coque.

Lors de sa fabrication, le fût 10 est soumis à une étape appelée chauffe initiale, lors de laquelle ledit fût dépourvu de fond est disposé au-dessus d'un feu pour le brûlage des douelles. Cette chauffe est matérialisée sur la figure 2A par une zone 20 dans le bois.

Lors de l'élevage du vin, un dépôt 22 se forme au niveau de la surface intérieure du fût, réduisant les échanges entre le bois et le vin. On retrouve ce dépôt 22 tant au niveau des surfaces intérieures de la coque 12 que des surfaces intérieures des fonds 16.

Le procédé de reconditionnement de l'invention consiste à retirer les fonds 16, à retirer la chauffe initiale sur au moins une partie de la surface intérieure du fût, notamment de la coque 12, comme illustré par la figure 2B, et à réaliser une nouvelle chauffe, matérialisée par la zone 24 dans le bois, d'intensité et de durée variables en fonction de la nature aromatique et tannique du bois souhaitée, comme illustré par la figure 2C.

Selon les cas, les fonds 16 peuvent être changés, retournés afin de disposer la face sur laquelle est présent le dépôt 22 vers l'extérieur, nettoyés, ou grattés afin de retirer le dépôt 22.

Pour retirer les fonds, la coque est desserrée. Elle est avantageusement resserrée préalablement à l'étape de retrait de la chauffe initiale afin d'éviter toute dislocation.

On peut retirer la chauffe sur toute la longueur des douelles ou sur une partie, de préférence entre les jables.

De préférence, les fonds ne sont pas changés mais également reconditionnés, la surface intérieure ou extérieure des fonds étant rabotée et chauffée.

Si les fonds sont retournés, c'est-à-dire si la surface disposée initialement vers l'extérieur est disposée après reconditionnement vers l'intérieur, les formes des jables et/ou la périphérie des fonds sont travaillées pour de nouveau coopérer.

Avantageusement, la coque et les fonds subissent à la fin une phase de ponçage et de finition.

Contrairement au solution existante, la paroi intérieure est rabotée sur une profondeur suffisante de manière à retirer l'intégralité de la chauffe initiale. Ainsi, la nouvelle chauffe est pratiquée sur du bois n'ayant jamais subi une chauffe.

De manière surprenante, on note que les échanges sont supérieurs à ceux obtenus avec un fût neuf car le bois du fût reconditionné selon l'invention est plus sec que lors du premier passage du vin.

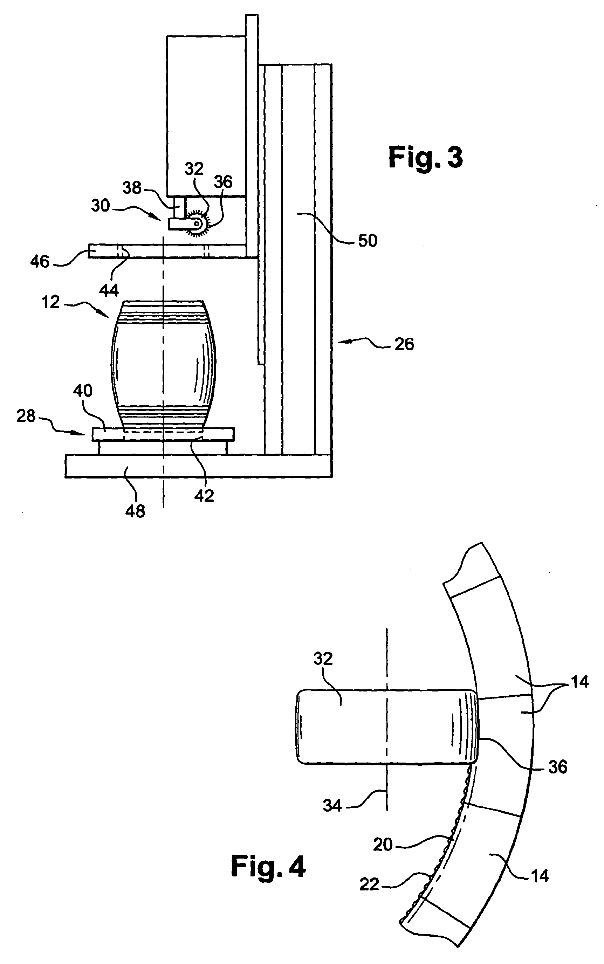

Sur les figures 3, 4, 5A, 5B et 5C, on a représenté un dispositif apte à retirer la chauffe initiale 20.

Ce dispositif comprend un bâti 26 avec des moyens 28 de maintien et de mise en rotation pas à pas d'une coque 12 et un outil 30 susceptible de se translater parallèlement aux douelles de la coque dudit fût afin de retirer la chauffe 20 initiale.

Selon un mode de réalisation préféré, illustré par la figure 4, l'outil 30 se présente sous la forme d'un galet 32 susceptible de pivoter autour d'un axe 34, avec une surface active 36 rugueuse dont le rayon de courbure est adapté au rayon intérieur de la coque 12. En complément, l'outil 30 comprend de part et d'autre du galet 32 deux couronnes susceptibles de prendre appui contre la paroi intérieure du fût, ledit galet ayant une partie de la surface active 36 en saillie par rapport aux couronnes. Ainsi, pour régler la profondeur de passe, il suffit d'ajuster la position relative des galets et des couronnes.

Une motorisation est prévue pour la mise en rotation du galet 32 ainsi que des moyens de rappel, sous forme d'un vérin pneumatique par exemple, permettant de maintenir le galet 32 plaqué contre la paroi intérieure de la coque malgré le galbe de ladite coque, et d'exercer un effort de coupe afin de retirer de la matière.

L'outil 30 est de préférence disposé à l'extrémité d'un bras 38 susceptible de se translater parallèlement aux douelles. De préférence, le bras 38 est télescopique. Selon un autre mode de réalisation, le bras 38 porte outil comprend au niveau de son extrémité libre inférieure l'outil 30 et est monté pivotant au niveau de son extrémité supérieure par rapport à une base susceptible de coulisser verticalement sur au moins une glissière grâce à un actionneur, notamment des vérins hydrauliques.

Les moyens 28 de maintien et de mise en rotation pas à pas d'une coque 12 comprennent un plateau 40 avec en partie supérieure un logement 42 dans lequel est susceptible de se loger, notamment s'emboîter, une extrémité de la coque. Le plateau 40 comprend des moyens de mise en rotation. Ainsi, lorsque l'outil 30 a usiné une bande, le plateau 40 pivote de manière à disposer l'outil au droit d'une zone non usinée.

Avantageusement, le logement 42 correspond à l'orifice d'une couronne rapportée de manière démontable sur le plateau 40. Ainsi, le dispositif peut s'adapter rapidement à différents diamètres de fûts en changeant uniquement la couronne.

On note que le fût est disposé verticalement si bien que les efforts de coupe tendent à pousser le fût vers le bas en direction du plateau 40 permettant d'accroître la pression de coincement du fût dans le logement 42 et de favoriser le maintien du fût. Selon cet agencement, on obtient une meilleure reprise des efforts de coupe.

La disposition verticale du fût favorise l'évacuation des copeaux qui tombent en partie inférieure et sont ensuite aspirés.

Afin de faciliter le retrait du fût du logement 42, au moins un actionneur peut être prévu sous le plateau 40 susceptible de pousser le fût vers le haut.

Avantageusement, les moyens 28 de maintien comprennent une couronne 44 apte à maintenir l'extrémité supérieure de la coque. Cette couronne 44 est montée pivotante sur un cadre 46 susceptible de se translater entre deux positions extrêmes, une première dans laquelle la couronne 44 maintient la coque et une seconde dans laquelle la couronne 44 ne maintient plus la coque afin de la retirer ou l'introduire dans le logement 42 du plateau 40. Comme précédemment, cette couronne 44 est rapportée de manière démontable sur le cadre 46 pour être changée rapidement et adaptée le dispositif au diamètre du fût.

En variante, le cadre 46 comprend une ouverture apte à recevoir de manière ajustée l'extrémité supérieure de la coque, la surface en contact avec la coque comportant un revêtement favorisant le glissement.

Selon un mode de réalisation, le bâti 26 comprend un socle 48 sur lequel est rapporté le plateau 40 et au moins un montant 50 auquel sont reliées le cadre 46 et le bras 38.

Le mode de fonctionnement du dispositif est maintenant expliqué au regard des figures 3, 4 et 5A à 5C.

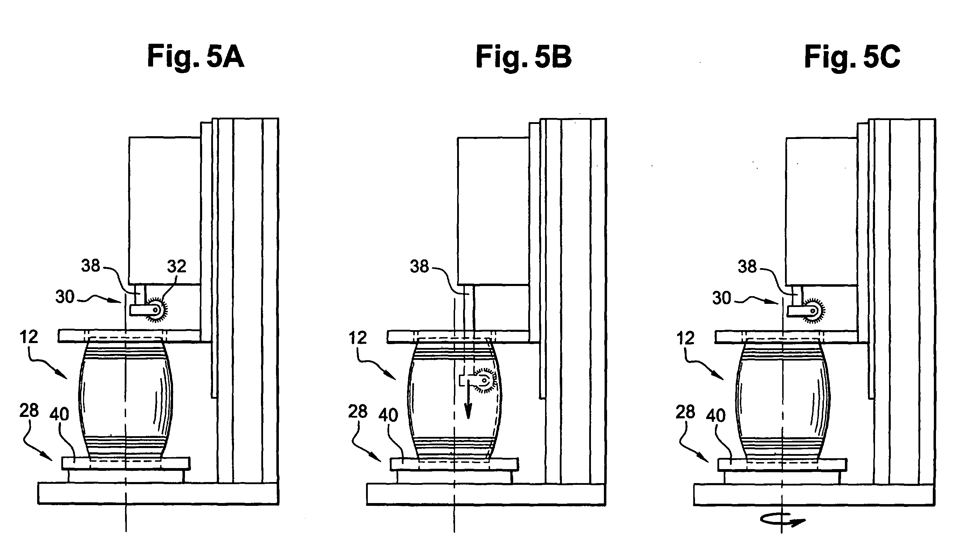

Une coque 12 est introduite dans le logement 42 du plateau 40 comme illustré sur la figure 3. Ensuite, le cadre 46 se translate vers le bas afin que l'extrémité supérieure de la coque soit maintenue par la couronne 44, comme illustré par la figure 5A. Suite à ces étapes, la coque est solidarisée au dispositif et l'opération d'usinage peut commencer.

L'outil 30 se translate alors parallèlement aux douelles comme illustré par la figure 5B et retire de la matière au niveau de la surface intérieure de la coque, comme illustré par la figure 4.

Lorsque l'outil 30 a retiré une bande de matière, l'outil est dégagé et n'est plus en contact avec la surface de la coque. A cet instant, le plateau 40 pivote comme illustré sur la figure 5C afin que l'outil soit disposé au droit d'une zone non usinée, de préférence juxtaposée à la bande précédemment usinée.

L'outil 30 effectue de nouveau une translation afin de retirer une nouvelle bande et ainsi de suite sur toute la périphérie de la coque.

Bien entendu, l'invention n'est évidemment pas limitée au mode de réalisation représenté et décrit ci-dessus, mais en couvre au contraire toutes les variantes, notamment en ce qui concerne le dispositif prévu pour retirer la chauffe initiale.

Enfin, ce procédé de traitement d'un fût peut s'appliquer à tout contenant en bois, qu'il soit utilisé pour conditionner un liquide ou un solide.

## Revendications

1. Procédé pour le traitement d'un fût (10) en bois, notamment utilisé pour élever un vin, un spiritueux ou analogue, ledit fût (10) ayant subi une chauffe (20) dite initiale **caractérisé en ce qu'**il comprend les étapes suivantes consistant à :
- retirer la chauffe initiale (20) sur au moins une partie de la surface intérieure du fût (10), et
- réaliser une nouvelle chauffe (24).

2. Procédé selon la revendication 1, **caractérisé en ce qu'**on retire la chauffe initiale (20) par enlèvement de matière entre les jables de la coque.

3. Procédé selon la revendication 1, **caractérisé en ce qu'**on retire la chauffe initiale (20) par enlèvement de matière sur toute la longueur de la coque (12).

4. Procédé selon la revendication 3, **caractérisé en ce que** les formes des jables sont de nouveau travaillées pour coopérer avec la périphérie des fonds.

5. Procédé selon l'une quelconque des revendications 1 à 4, **caractérisé en ce que** les fonds du fût sont reconditionnés.

6. Procédé selon la revendication 5, **caractérisé en ce qu'**au moins une des surfaces des fonds est rabotée et chauffée.

7. Dispositif pour la mise en oeuvre du procédé selon l'une quelconque des revendications 1 à 6, comprenant des moyens (28) de maintien et de mise en rotation pas à pas d'une coque (12) et un outil (30) susceptible de se translater parallèlement aux douelles de la coque, **caractérisé en ce que** les moyens (28) de maintien et de mise en rotation pas à pas comprennent un plateau (40) susceptible de pivoter, avec un logement (42) dont le diamètre est adapté à celui de la coque afin que ladite coque soit immobiliser par coincement dans ledit logement dans une position verticale.

8. Dispositif selon la revendication 7, **caractérisé en ce que** les moyens (28) de maintien comprennent une couronne (44) apte à maintenir l'extrémité supérieure de la coque.

## Claims

1. A process for the treatment of a wooden barrel (10), used, in particular, for ageing wines, spirits or the like, said barrel (10) having been subjected to a socalled initial heat process (20), wherein the process includes the steps of :
- cancelling the effect of the initial heat process (20) over at least a portion of an interior surface of the barrel (10), and,
- performing a new heat process (24).

2. A process as claimed in claim 1, wherein the effect of the initial heat process (20) is cancelled by removing matter between cross-grooves of a shell of the barrel.

3. A process as claimed in claim 1, wherein the effect of the initial heat process (20) is cancelled by removing matter along the entire length of a shell (12) of the barrel.

4. A process as claimed in claim 3, wherein the shapes of the cross-grooves are again working to cooperate with the periphery of the bottom of the barrel.

5. A process as claimed in any one of claims 1 to 4, wherein bottoms of the barrel are reconditioned.

6. A process as claimed in claim 5, wherein in that at least one of the surfaces of the bottoms is planed and heated.

7. An apparatus for carrying out the process as claimed in any one of claims 1 to 6, said apparatus including means (28) for keeping in position and stepwise rotating a shell (12) of a barrel and a tool (30) capable of shifting parallel to staves of the shell, wherein the means (28) for keeping in position and for stepwise rotating the shell includes a rotatable platform (40) including a receiving formation (42) for receiving an end of the shell so that said shell is immobilized by being jammed in the receiving formation in vertical position.

8. An apparatus as claimed in claim 7, wherein the means (28) for keeping in position includes a collar (44) configured and dimensioned for retaining an upper end of the shell in position.

## Patentansprüche

1. Verfahren zur Behandlung eines Fasses (10) aus Holz, das insbesondere für den Ausbau eines Weins, einer Spirituose oder ähnlichem verwendet wird, wobei das Fass (10) einen sogenannten anfänglichen Ausbrand (20) unterzogen wurde, **dadurch gekennzeichnet, dass** es folgende Schritte umfasst:
- Entfernen des anfänglichen Ausbrands (20) auf mindestens einem Teil der Innenfläche des Fasses (10), und
- Vornehmen eines neuen Ausbrands (24).

2. Verfahren nach Anspruch 1, **dadurch gekennzeichnet, dass** der anfängliche Ausbrand (20) durch Materialabtrag zwischen den Kimmen des Rumpfes entfernt wird.

3. Verfahren nach Anspruch 1, **dadurch gekennzeichnet, dass** der anfängliche Ausbrand (20) durch Materialabtrag über die gesamte Länge des Rumpfes (12) entfernt wird.

4. Verfahren nach Anspruch 3, **dadurch gekennzeichnet, dass** die Formen der Kimmen zum Eingriff mit dem Umfang der Böden erneut bearbeitet werden.

5. Verfahren nach einem der Ansprüche 1 bis 4, **dadurch gekennzeichnet, dass** die Böden des Fasses rekonditioniert werden.

6. Verfahren nach Anspruch 5, **dadurch gekennzeichnet, dass** mindestens eine der Bodenflächen abgehobelt und ausgebrannt wird.

7. Vorrichtung zur Durchführung des Verfahrens nach einem der Ansprüche 1 bis 6, umfassend Mittel (28), mit denen ein Rumpf (12) festgehalten und schrittweise in Drehung versetzt wird, und ein Werkzeug (30), das parallel zu den Dauben des Rumpfes verschiebbar ist, **dadurch gekennzeichnet, dass** die Mittel (28), mit denen der Rumpf festgehalten und schrittweise in Drehung versetzt wird, eine schwenkbare Platte (40) mit einer Aufnahme (42) aufweisen, deren Durchmesser dem des Rumpfes angepasst ist, so dass der Rumpf in der Aufnahme durch Einklemmen in vertikaler Position fixiert wird.

8. Vorrichtung nach Anspruch 7, **dadurch gekennzeichnet, dass** die Mittel (28), mit denen der Rumpf festgehalten wird, eine Krone (44) umfassen, die in der Lage ist, das obere Ende des Rumpfes festzuhalten.
